# EUROPEAN PATENT APPLICATION

(11) **EP 0 902 045 A1**
(43) Date of publication of application: **17.03.1999**
(21) Application number: 97202794.0
(22) Date of filing: 11.09.1997
(51) Int. Cl.: C08J 3/22

(54) **Masterbatch composition**

(71) Applicant: THE PROCTER & GAMBLE COMPANY, Cincinnati, Ohio 45202 (US)
(72) Inventor: Varlet, Jean-Luc Patrick André, 1180 Uccle (BE)
(74) Representative: Mather, Peter Geoffrey

(57) **Abstract**

The present invention relates to an improved coloration process for thermoplastic resins using a masterbatch containing pigments. The masterbatch composition is comprising a metallocene catalysed resin as a carrier for the pigment, so as to improve the affinity between the thermo-plastic resin and the pigment to provide a better dispersion.

## Description

### Technical field

The invention relates to a process for coloration of plastic resins.

### Background of the invention

Coloration of plastic resins is usually achieved using a masterbatch. A masterbatch is a granular, usually dust free colorant composition comprising substantially high concentrations of pigment. This masterbatch is normally added to a thermo-plastic resin, which is normally in granular form also, prior to processing of the mixture, by extrusion or injection for example.

The reason for using the masterbatch technique is that direct coloration with pigments raises issues due to poor dispersion. The masterbatch is also used for minimising the risk of abrasion of the extruders. Indeed, the pigments will tend to cover the surface of the processing apparatus without having a good dispersion within the resin itself.

The present invention relates to a process for coloration of a thermoplastic resin comprising the step of mixing the thermoplastic resin in a granular form with a colorant composition comprising pigments to form a granular mixture, the colorant composition being in the granular form during mixing.

Existing masterbatch or granular colorant compositions may comprise the pigments together with a carrier. The role of the carrier is to enhance the affinity of the pigment with the thermo-plastic resin for coloration and to improve the dispersion and mixing of the colorant composition with the resin.

Such compositions are disclosed in various documents. EP-A-0 751 171 published on the 2^{nd} of January 1997 describes a colorant composition whereby the carrier is comprising poly-olefins and poly-acrylate-ester. A different composition is proposed in US-A-5 604 279 granted on the 18^{th} of February 1997, whereby the colorant composition also comprises poly-olefins together with a free flow agent. Such compositions should facilitate dispersion of the pigment within the final product. However, these colorant compositions are not compatible with all polymers, and for example have a poor affinity with polypropylene.

Consequently, it is an object bf the present invention to provide a coloration process allowing better dispersion of pigments in a thermoplastic resin.

### Summary of the invention

The present invention provides a process in a manner to satisfy the aforementioned needs.

The process of the invention has the mixing step characterised in that the colorant composition comprises a metallocene catalysed resin.

### Detailed description of the invention

The colorant composition of the invention for a masterbatch comprises pigments. The pigments are the colouring agent. They are comprised in a masterbatch because mixing them directly with a thermo-plastic resin may be difficult due to a low affinity. Once the pigments are integrated in a masterbatch, usually together with a carrier, the masterbatch can be mixed with the thermo-plastic resin for coloration. Normally, mixing occurs when the masterbatch and the thermo-plastic resin are in a granular state. The word "resin" refers to a family of materials which can be processed to be in granular form or in liquid form. It is a feature of the process of the present invention that the resin is used in a granular form. The pigments used may be organic or inorganic pigments. A colorant composition usually contains between 15% to 90% by weight, preferably 20% to 80%, more preferably 40% to 60%, most preferably 45% to 55%, of pigments.

Other ingredients may be added to a colorant composition, among which a carrier. Preferably, a colorant composition contains between 8% to 85% by weight, preferably 18% to 80%, more preferably 18% to 60%, most preferably 43% to 55%, of carrier. Other additives may be used, such as anti-oxydant, lubricating agents, surface tension reducers or agents facilitating labeling. Such additives may be contained between 0% to 2% by weight in the colorant composition.

In traditional colorant composition, the carrier may be polyethylene, preferably low density polyethylene because of its lubricating properties, preferably polypropylene when the masterbatch is for mixing with a poly-propylene thermoplastic, or for example polystyrene. Indeed the choice of the carrier often depends on the thermo-plastic resin to be coloured.

The colorant composition of the invention comprises a metallocene catalysed resin. Indeed, it was found that a metallocene catalysed resin would significantly improve the homogenisation and dispersion of the pigment in the mixture. Because of the improvement in the masterbatch dispersion, a more uniform phase can be obtaIned. Consequently, less pigment may be used. Indeed it is an object of the present invention to reduce material costs, in particular pigment costs, while maintaining coloration quality. This objective can be obtained when introducing the metallocene catalysed resins, which differ from, for example, the Ziegler-Natta catalysed resin, in that the molecular weight distribution of metallocene catalysed resins is narrower. The molecular weight distribution is defined here as M_{w}/ Mₙ, whereby M_{w} is the weight average molecular weight and Mₙ is the number average molecular weight. A molecular weight distribution of metallocene catalysed resins is typically of less than 3.5, especially from 1.5 to 2.5, whereas the molecular weight distribution of ZieglerNatta catalysed resin is typically of more than 3.5, most typically of more than 5.

The process of the invention is particularly useful for the coloration of thermoplastic resins when the thermoplastic resins to be coloured are made using a Ziegler Natta catalysis. Indeed such resins can be manufactured at low cost, while they can be coloured in an improved manner if using the colorant composition according to the process of the invention. In the case of a coloration of thermoplastic resins which comprise metallocene catalysed resins prior to the mixing step, coloration will be improved further if the colorant composition also comprises metallocene catalysed resins according to the invention.

Various kinds of metallocene catalysed resins may be used in the colorant composition. Such resins comprise poly-olefins, preferably polyethylene or poly-propylene. The choice of the resin to use may depend on the thermoplastic resin which should be coloured. For example, metallocene catalysed poly-propylene will have an excellent affinity for mixing with a poly-propylene resin to be coloured.

Once the mixing of the masterbatch with the thermo-plastic resin to be coloured is achieved, the mixture may be processed in different ways. Processes which can be used include injection moulding, blow moulding or injection stretch blow moulding.

In a preferred embodiment of the invention, the thermo-plastic resin to be coloured is a poly-propylene. The thermo-plastic resin to be coloured may be another poly-olefin such as poly-ethylene. The thermo-plastic resin to be coloured may also be a blend of different materials. The metallocene used in the colorant composition is a poly-ethylene, which has a good affinity with polypropylene. The metallocene catalysed resin may be used to replace completely the traditional carrier such as low density poly-ethylene, or may replace it partially only. Preferably, a colorant composition contains between 8% to 85% by weight, preferably 5% to 70%, more preferably 10% to 60%, even more preferably 15% to 40% and most preferably 20% to 30%, of metallocene catalysed resin. The mixture prepared in the preferred embodiment of the invention may be used for example for injection moulding of a cap for a container, or for blow moulding of a bottle. Such a poly-propylene cap would be particularly suitable for cooperating with a container for containing consumer goods, whereby the coloration of the product allows recognition by the consumer. Indeed, it is a further object of this invention to obtain good quality colouring. This can be achieved while controlling the costs as the metallocene catalysed resin is present in the granular mixture preferably in the proportion of 0.1% to 10% by weight of the mixture, more preferably between 0.1% and 8%, most preferably between 0.2% and 2%. The thermo-plastic resin to be coloured may also comprise metallocene catalysed resins which would not be coming from the masterbatch, in which case the proportion of metallocene catalysed resins in the mixture may be higher, and may exceed the total weight of the masterbatch itself.

The addition of metallocene resin to the masterbatch does not only ease coloration and does not only have aesthetic consequences on the final mixture, but also has consequences on the mechanical properties of the object obtained after processing of the mixture. Indeed, because the pigment has a better dispersion, thus allowing a better crystallisation, the object obtained shows an improved stress cracking resistance, which is a further advantage given by the invention. This aspect of the invention is particularly useful if the object is in contact with a chemically aggressive composition such as an oxidising composition, for example. This particularly applies to packaging of products such as bleach containing compositions.

The example which follows explains the invention:

### Example:

The masterbatch of the example is made of a granular colorant composition comprising 80% by weight of pigments and up to 20% by weight of metallocene catalysed polyethylene having a molecular weight distribution of less than 3.5. The masterbatch can also include additional materials that do not affect its essential character, for instance stabilizers, processing aids such as waxes, deodorizing agents, anti-static agents, anti-blocking agents, plasticizers and the like.

The granular thermoplastic resin for coloration is made of Ziegler-Natta catalysed polypropylene having a density of 0.9 g/cm³.

The thermoplastic resin in the granular form is mixed with the masterbatch in the granular form to obtain the granular mixture. In this example, the granular mixture is composed of 4% by weight of the granular colorant composition composing the masterbatch and of 96% by weight of the thermoplastic resin. The granular mixture is subsequently injected to obtain the coloured object desired.

## Claims

1. A process for coloration of a thermoplastic resin comprising the step of mixing the thermoplastic resin in a granular form with a colorant composition comprising pigments to form a granular mixture, the colorant composition being in the granular form during mixing, the mixing step being characterised in that the colorant composition comprises a metallocene catalysed resin.

2. A process as in claim 1, whereby the process further comprises the step of using the mixture for injection moulding of a closure for a container.

3. A process as in claim 1, whereby the process further comprises the step of using the mixture for blow moulding of a container.

4. A process as in claim 2 or 3, whereby the container is used for containing a chemically aggressive composition.

5. A process as in claim 1, whereby the thermoplastic resin is a polyolefin resin, preferably made using Ziegler-Natta catalysis.

6. A process as in claim 5, whereby the polyolefin resin is a poly-propylene resin.

7. A process as in claim 1, whereby the metallocene catalysed resin is comprised in the granular colorant composition in a proportion of 0.1% to 10% of the granular mixture weight.

8. A process according to claim 1, whereby the granular colorant composition comprises pigments in a proportion of 20% to 80% of the weight of the granular colorant composition and whereby the metallocene catalysed resin is comprised in the granular colorant composition in a proportion of 1% to 80% of the weight of the granular colorant composition.

9. A process according to claim 1, whereby the metallocene catalysed resin is a poly-ethylene.

10. A process according to claim 1, whereby the metallocene catalysed resin acts as a carrier for the pigments.
